# EUROPÄISCHE PATENTSCHRIFT

(11) **EP 1 424 232 B1**
(45) Veröffentlichungstag und Bekanntmachung des Hinweises auf die Patenterteilung: **01.03.2006**
(21) Anmeldenummer: 03026215.8
(22) Anmeldetag: 14.11.2003
(51) Int. Cl.: B60J 5/00, B60J 5/02, B60J 5/04, B60J 5/10, B60J 10/02, B60J 10/08

(54) **Profilrahmen**
Profile frame
Cadre profilé

(30) Priorität: 26.11.2002 DE 10255251
(43) Veröffentlichungstag der Anmeldung: 02.06.2004
(73) Patentinhaber: Wagon Automotive GmbH, 63857 Waldaschaff (DE)
(72) Erfinder: Hock, Michael, Dipl.-Ing., 63762 Grossostheim (DE); Hock, Jürgen, 63762 Grossostheim (DE); Krebs, Thomas, 63831 Wiesen (DE); Krimm, Thomas, 63739 Aschaffenburg (DE); Überreiter, Thomas, 63165 Mühlheim (DE); Vath, Klaus, 63849 Leidersbach (DE)
(74) Vertreter: Gesthuysen, von Rohr & Eggert

(56) Entgegenhaltungen:
- EP-A- 0 437 188
- DE-A- 10 063 459
- DE-A- 10 105 603
- DE-A- 19 829 457

## Beschreibung

Die Erfindung betrifft einen Profilrahmen als Türfensterrahmen einer Kraftfahrzeugtür oder -klappe mit den, in der DE 19829457A offenbarten Merkmalen des Oberbegriffs von Anspruch 1, eine Kraftfahrzeugtür oder -klappe mit einem solchen Profilrahmen gemäß dem Oberbegriff von Anspruch 10 sowie ein Verfahren zur Herstellung eines solchen Profilrahmens gemäß dem Oberbegriff von Anspruch 19.

Der Stand der Technik zu Profilrahmentüren sowie der Alternative, Stanzschalentüren, wird in der DE 198 54 775 A1 umfangreich erläutert, auf die hier als Hintergrund verwiesen werden darf. Aus diesem Stand der Technik ergibt sich eine Profilrahmentür, die die durchgehend gleiche Einbaubreite des Profilrahmens offenbart, wobei Veränderungen der wirksamen Einbaubreite der Kraftfahrzeugtür durch Verwendung von Anbauteilen am Profilrahmen realisiert werden. Diese Anbauteile werden dort am Profilrahmen mittels eines Aufsteckflansches befestigt. Die Anbauteile werden am Profilrahmen im Endzustand, also bei fertig geformtem Profilrahmen angebracht.

Von vornherein integriert in den als Rollprofil oder Walzprofil aus einem Flachbandmaterial ausgeführten Profilrahmen hat man bereits einen auf ein bestimmtes Maß abgestellten Flansch, an dem eine Dichtungsanlage- oder Dichtungsanbringungsfläche ausgebildet ist (DE 101 05 603 A1). Dieser Profilrahmen ist aus Stahl- oder Leichtmetall-Flachbandmaterial hergestellt. Dabei hat man bereits vorgesehen, den Flansch ggf. auf eine kürzere Länge als das Hohlprofil abzulängen, also abzuschneiden. Außerdem ist es in diesem Zusammenhang bereits bekannt, partiell Ausklinkungen und Beschnitte vorzunehmen, um kleinere Biegeradien zu ermöglichen oder durch den Dehnungsprozeß verursachte Formänderungen zu korrigieren. Von diesem Stand der Technik geht die Lehre der vorliegenden Erfindung aus.

Beim Rollprofilieren oder Walzprofilieren als Herstellungsprozeß wird aus einem Flachbandmaterial, insbesondere einem Stahl-Flachbandmaterial, durch mehrere hintereinander angeordnete und unterschiedlich ausgerichtete und profilierte Rollenpaare bzw. Walzenpaare ein Profilstab der gewünschten Querschnittsgeometrie erzeugt. Dieser zunächst endlos vom Coil ausgehend erzeugte Profilstab wird nach Verlassen der letzten Profilierungsstufe auf ein gewünschtes Maß abgelängt. Dadurch entsteht letztlich ein gerader Profilstab der gewünschten Geometrie mit der gewünschten Ausgangslänge.

Am Profilstab sind von vornherein entsprechende Konturierungen ausgebildet, die Dichtungsanlageflächen und/oder Dichtungsanbringungsformungen oder andere Profilierungen zeigen. Im Sinne der Lehre der vorliegenden Erfindung sind also Anlageflächen und Anbringungsformungen zwar insbesondere für Dichtungen vorgesehen, können aber auch für andere Anbauteile des Profilrahmens zur Befestigung oder Anlage dienen.

Aus der DE 19829457A ist es bekannt, einen Profilrahmen als Fensterrahmen einer Kraftfahrzeugtür oder -klappe als Rollprofil oder Walzprofil aus einem Flachbandmaterial herzustellen und diesen Profilrahmen an seinen Enden mit gegossenen Zusatzprofilen zu versehen, mit deren Hilfe dann dieser Profilrahmen im Türkasten einer Kraftfahrzeugtür oder -klappe verankert werden kann. Die als Gußteile ausgeführten Zusatzprofile sind Verankerungs- und Anschlußmittel zur Verankerung des Profilrahmens im Türkasten.

Der Lehre liegt das Problem zugrunde, einen Profilrahmen der in Rede stehenden Art so auszugestalten, das er noch optimaler hergestellt und eingebaut werden kann. Entsprechend gilt die Problemstellung auch auf der Grundlage der Weitergestaltung einer Kraftfahrzeugtür oder -klappe, sowie der Ausgestaltung des bekannten Herstellungsverfahrens.

Die zuvor aufgezeigte Problemstellung ist bei einem Profilrahmen mit den Merkmalen des Oberbegriffs von Anspruch 1 durch die Merkmale des kennzeichnenden Teils von Anspruch 1 gelöst. Bevorzugte Ausgestaltungen und Weiterbildungen eines solchen Profilrahmens sind Gegenstand der Ansprüche 2 bis 9.

Die Lehre der Erfindung realisiert sich in ähnlicher Weise auch an einer Kraftfahrzeugtür oder -klappe mit den Merkmalen des Anspruchs 10. Die Ansprüche 11 bis 18 erläutern bevorzugte Ausgestaltungen.

Gegenstand der Lehre ist schließlich auch ein Verfahren wie es im Anspruch 19 beschrieben worden ist. Bevorzugte Ausgestaltungen des Verfahrens sind Gegenstand der Ansprüche 20 bis 23.

Wesentlich ist, daß die erfindungsgemäße Gestaltung des Profilrahmens das grundlegende, gewissermaßen das Rückgrat bildende Hohlprofil, hergestellt als Rollprofil oder Walzprofil, aus dem Stand der Technik übernimmt, diesem aber, vor allem an den Enden, andere Funktionen, Querschnitte und Anbringungsmöglichkeiten zuordnet, ohne damit die Komplexität der Herstellung zu erhöhen. Im Gegenteil, durch die Aufteilung des Profilrahmens in zumindest zwei einzelne, miteinander dauerhaft fest verbundene Profile kann man eine optimale Zuordnung der Funktionen und Anforderungen verwirklichen.

Im folgenden wird die Erfindung anhand einer lediglich Ausführungsbeispiele darstellenden Zeichnung näher erläutert. In der Zeichnung zeigt
- Fig. 1: eine schematische Ansicht einer Kraftfahrzeugtür mit einem Profilrahmen als Türfensterrahmen, nochmals separat als Bauteil in fertiger Form hinzugefügt,
- Fig. 2: den Endbereich des Profilrahmens aus Fig. 1 in dem Türkasten unterhalb der Brüstungslinie,
- Fig. 3: einen Schnitt durch einen Profilrahmen des den Ausgangspunkt bildenden Standes der Technik, der komplett einteilig als Rollprofil oder Walzprofil aus einem Flachbandmaterial hergestellt ist,
- Fig. 4: die schematische Ansicht eines gestreckten Profilstabs, der letztlich einen erfindungsgemäßen Profilrahmen bildet,
- Fig. 5: die Schnitte A-A, B-B, C-C, D-D so wie in Fig. 1 eingezeichnet,
- Fig. 6: den oberen Eckbereich einer erfindungsgemäßen Kraftfahrzeugtür im Rohbauzustand und
- Fig. 7: denselben oberen Eckbereich wie in Fig. 6, nunmehr mit einem Zusatz-Anbauteil versehen.

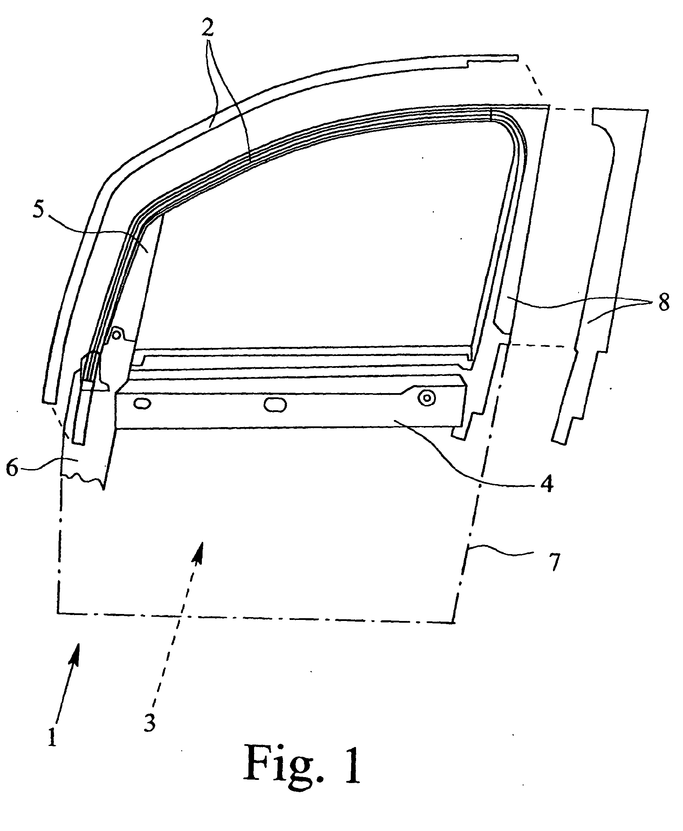

Fig. 1 zeigt als Beispiel für die Anwendung der Erfindung eine Kraftfahrzeugtür 1. An ihrer Stelle könnte auch eine Kraftfahrzeugklappe, beispielsweise eine Heckklappe vorgesehen sein. Die Kraftfahrzeugtür 1 umfaßt jedenfalls einen Profilrahmen 2, der im dargestellten Ausführungsbeispiel als Fensterrahmen der Kraftfahrzeugtür 1 dargestellt ist. Hier gibt es eine Vielzahl von Möglichkeiten der Ausgestaltung, beispielsweise als Türrahmen oder als kombinierter Fensterrahmen und Türrahmen, ein sogenannter Türfensterrahmen. Angedeutet ist ferner eine Türaußenwandung 3 der Kraftfahrzeugtür 1, ein Fensterschachtprofil 4, das gleichzeitig Seitenaufprallschutz ist, ein Spiegeldreieck 5 als Teil eines Scharnierträgers 6 des Türkastens 7, der nur angedeutet ist, sowie ein Verstärkungsprofil 8 an der B-Säule. Im einzelnen darf als Beispiel für den Aufbau entsprechender Kraftfahrzeugtüren auf den eingangs angesprochenen Stand der Technik hingewiesen werden sowie auf den VDI-Bericht "Flush Glass im Systemvergleich", Nr. 818, 1990, Seiten 43 ff.

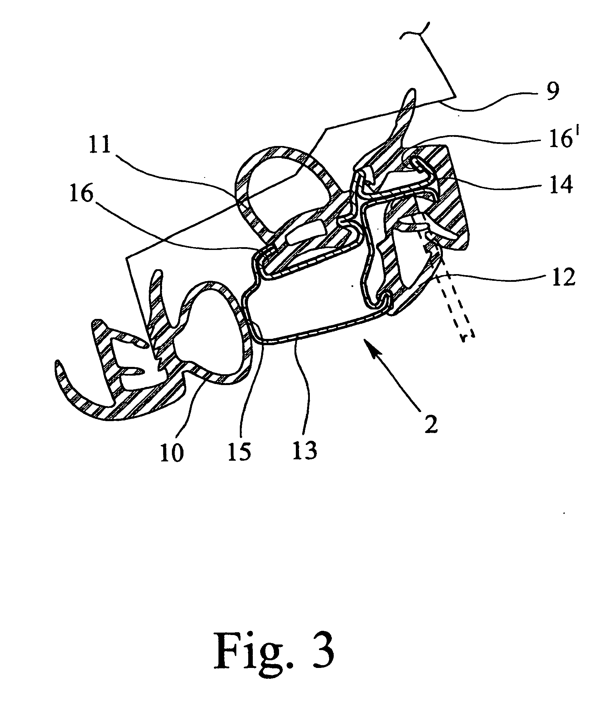

Der Profilrahmen 2 der Kraftfahrzeugtür 1 dient der Führung des Fensters, Versteifung der Kraftfahrzeugtür 1 insgesamt und der Abdichtung der Kraftfahrzeugtür 1 im Rahmen eines zugeordneten Karosserieausschnittes 9 (Fig. 3). Fig. 3 läßt erkennen, wie eine umlaufende Dichtung 10 im Karosserieausschnitt 9 angebracht ist, eine weitere Dichtung 11 am Profilrahmen 2 angebracht ist und eine Fensterführungsdichtung 12 ebenfalls am Profilrahmen 2 angebracht ist. Alles dies wird in Fig. 3 anhand eines im Querschnitt dargestellten Profilrahmens 2 des Standes der Technik, hergestellt komplett einstückig als Rollprofil oder Walzprofil, dargestellt.

Die Verwindungssteifigkeit gewinnt der Profilrahmen 1 aus Fig. 3 durch das mindestens eine in ihm ausgebildete Hohlprofil 13. Am Hohlprofil 13 ist im dargestellten Ausführungsbeispiel ein diesem folgender Flansch 14 ausgeformt. Das Hohlprofil 13 weist im dargestellten Ausführungsbeispiel in seinem Verlauf einen im wesentlichen unveränderten Querschnitt auf.

Den Dichtungen 10, 11, 12 entsprechen verschiedene Gegenelemente, nämlich eine Dichtungsanlagefläche 15 am Hohlprofil 13 sowie eine Dichtungsanbringungsformung 16, ebenfalls am Hohlprofil 13. Die Anbringungsformung 16 am Hohlprofil 13 hat hier eine C-Form, um die entsprechend komplementär geformte Dichtung 11 mit ihrem Fuß dort halten zu können. Die Darstellung in Fig. 3 zeigt im übrigen eine weitere Anbringungsformung 16' am Flansch 14.

Die Anlagefläche 15 und die Anbringungsformung 16, 16' können nicht nur der Anlage bzw. Anbringung von Dichtungen dienen, sondern auch andere Funktionen haben, die man am Profilrahmen 2 zu realisieren wünscht.

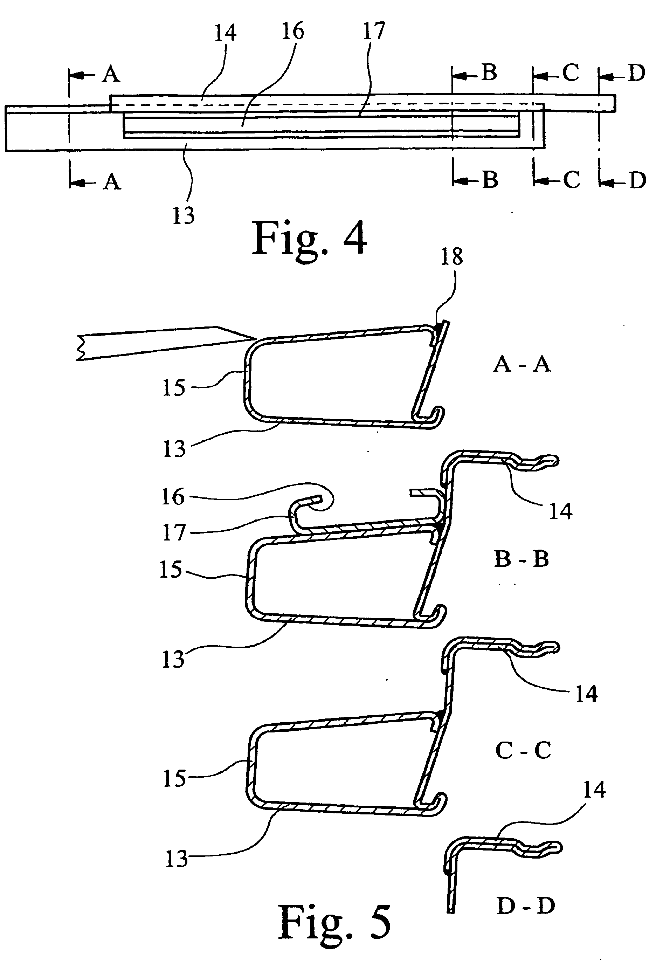

Aus Fig. 4 in Verbindung mit Fig. 5 erkennt man nun die Besonderheiten der Lehre der Erfindung. Hier erkennt man nämlich, daß mindestens eine Anlagefläche 15 und/oder Anbringungsformung 16 an einem vom Hohlprofil 13 separaten Zusatzprofil 17 ausgebildet ist und daß das Zusatzprofil 17 mit dem Hohlprofil 13 dauerhaft fest verbunden, insbesondere verschweißt ist. Im dargestellten Ausführungsbeispiel umfaßt das Zusatzprofil 17 das C-Profil des in Fig. 3 dargestellten Standes der Technik, das an sich zum Halten der Dichtung 11 vorgesehen ist. Während die Anlagefläche 15 am Hohlprofil 13 gemäß Fig. 4 und 5 einfach und selbstverständlich ausgebildet sein kann, ist die Anbringungsformung 16 für die Dichtung 11 in das separate, dauerhaft fest mit dem Hohlprofil 13 verbundene, nämlich mit diesem verschweißte Zusatzprofil 17 gewandert. Damit gewinnt man eine zusätzliche Flexibilität in der Gestaltung des Profilrahmens 2.

Das Zusatzprofil 17 muß im Rahmen der Erfindung nicht zwingend als Rollprofil oder Walzprofil aus einem Flachbandmaterial, insbesondere einem Stahl-Flachbandmaterial, aufgeführt sein, in bevorzugter Weise ist es aber so ausgeführt. Das bedeutet, daß der Profilrahmen 2 insgesamt hier aus zwei Profilen, nämlich dem Hohlprofil 13 und dem Zusatzprofil 17, beide als Rollprofil oder Walzprofil ausgeführt, "zusammengebaut" ist.

Fig. 4 läßt erkennen, daß die Längen des Hohlprofils 13 einerseits und des Zusatzprofils 17 andererseits unterschiedlich sind. Das Zusatzprofil 17 ist also an beiden Enden gegenüber dem Hohlprofil 13 gekürzt. Darauf wird später noch genauer eingegangen.

Ferner zeigt Fig. 4, daß die Längen des Hohlprofils 13 einerseits und des Flansches 14 andererseits unterschiedlich sind und daß die Längen des Zusatzprofils 17 und des Flansches 14 unterschiedlich sind. Der Flansch 14 erstreckt sich im dargestellten Ausführungsbeispiel an einem Ende deutlich über das Ende des Hohlprofils 13 und noch deutlicher des Zusatzprofils 17 hinaus und dient an diesem Ende der Verankerung des Profilrahmens 2 an der B-Säule, dort zur Verbindung mit dem Verstärkungsprofil 8.

Am anderen Ende überragt das Hohlprofil 13 den Flansch 14 ganz erheblich, d.h. im dargestellten Ausführungsbeispiel ist der Flansch 14 hier vom Hohlprofil 13 auf eine bestimmte Länge abgeschnitten worden. Mit dieser Länge tritt das Hohlprofil 13 bei fertig zusammengebauter Kraftfahrzeugtür in den Türkasten 7 ein und kann dort zur Verankerung des Profilrahmens 2 im Türkasten 7 genutzt werden.

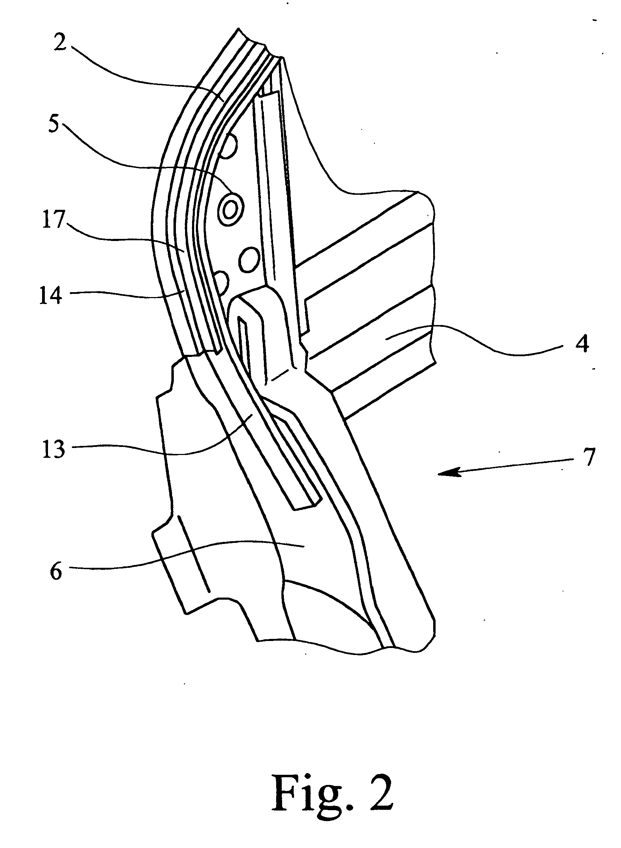

Zum zuvor erörterten Zweck ist vorgesehen, daß das Hohlprofil 13 an mindestens einem Ende einen erheblichen Überstand, insbesondere einen Überstand von 20 mm bis 120 mm, vorzugsweise einen Überstand von 30 mm bis 80 mm, zur Verankerung des Profilrahmens 2 unterhalb der Brüstungslinie im Türkasten 7 der Kraftfahrzeugtür oder -klappe aufweist. Man erkennt diesen Überstand in Fig. 2 besonders gut. Dort ist eben das Hohlprofil 13 hochfest und verwindungssteif im Türkasten 7 durch Verschweißen und/oder Verschrauben/Vernieten mit dem Scharnierträger 6 des Türkastens 7 verbunden.

Fig. 5 zeigt an verschiedenen Stellen einen Schnitt durch den Profilrahmen 2 aus Fig. 4, der in der erfindungsgemäßen Weise im dargestellten Ausführungsbeispiel aus Hohlprofil 13, Flansch 14 und Zusatzprofil 17 besteht. Der Schnitt B-B zeigt das vollständige Profil des Profilrahmens 2. Das Zusatzprofil 17 ist mit dem Hohlprofil 13 verschweißt. Der Schnitt A-A zeigt das in Fig. 4 links liegende, im Einbauzustand im Türkasten 7 liegende Ende des Profilrahmens 2. Hier ist das Zusatzprofil 17 nicht vorhanden. Der in diesem Bereich ursprünglich nach der Herstellung des Hohlprofils 13 vorhandene Flansch 14 ist in der in Fig. 5 A-A dargestellten Weise mittels eines angedeuteten Schneidmessers oder Abkantwerkzeugs weggeschnitten worden.

Dem Schnitt A-A sieht man eine Besonderheit an, die sich daraus ergibt, daß das Hohlprofil 13 zu seinem geschlossenen Zustand verschweißt ist und daß, die Schweißnaht 18 des Hohlprofils 13 sich innerhalb der Außenkontur des Hohlprofils 13 befindet. Man erkennt, daß die Schweißnaht 18 beim Abkanten des Flansches 14 in diesem Bereich nicht beschädigt wird. Damit bleibt das Hohlprofil 13 mit hoher Steifigkeit unbeschädigt bestehen.

Der Schnitt C-C zeigt den anderen Endbereich mit dem dort etwas zurückspringenden Zusatzprofil 17, das folglich im Schnitt C-C nicht mehr vorhanden ist. In diesem Bereich eröffnet das rückspringende Zusatzprofil 17 neue Möglichkeiten bei der Verbindung des Profilrahmens 2 mit dem an der B-Säule vorhandenen Verstärkungsprofil 8. Man kann insoweit auch bei der hinteren Seitentür entsprechende Maßnahmen an entsprechender Stelle vorsehen.

Der Schnitt D-D zeigt wie der Flansch 14 in diesem Endbereich allein fortgesetzt wird. Hier ist gegebenenfalls das Hohlprofil 13 selbst auf kürzere Länge abgeschnitten worden.

Die dargestellte Form des Profilrahmens 2 stellt nur ein Beispiel dar. Grundlegend kommt es darauf an, daß der Profilrahmen aus mindestens zwei Teilprofilen, nämlich dem Hohlprofil 13 und dem Zusatzprofil 17 zusammengesetzt, insbesondere verschweißt ist. Das ermöglichst die große Flexibilität der Gestaltung, auf die bereits eingangs hingewiesen worden ist. Gerade an den Enden des Profilrahmens 2 muß man besonderen Anforderungen der jeweiligen Kraftfahrzeugtür oder -klappe folgen, die von der jeweiligen Karosserie abhängen. Hier bietet der erfindungsgemäße Profilrahmen 2 flexiblere Möglichkeiten der Anpassung als die aus dem Stand der Technik bekannten Profilrahmen 2, jedenfalls wenn man auch die Schwierigkeiten bei der Herstellung und die entsprechenden Kosten mit im Auge hat.

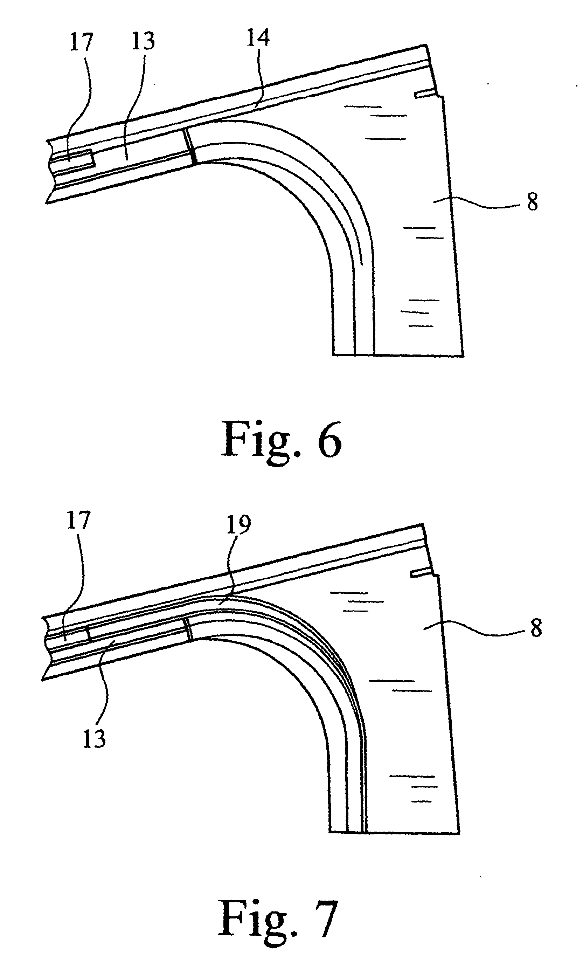

Wie bereits oben erläutert worden ist, ist der Übergang zur Verankerung im Türkasten 7 mittels des ungestörten, volle Widerstandsfähigkeit aufweisenden Hohlprofils 13 erfindungsgemäß besonders gut gelungen. Aber auch am anderen Ende zum Verstärkungsprofil 8 an der B-Säule hin ist eine zweckmäßige Lösung gefunden worden. Konstruktionsbedingt ist die Verbindungsstelle an der Innenseite nur schlecht zugänglich. Durch das hier schon vor dem Ende des Hohlprofils 13 endende Zusatzprofil 17 mit der Anbringungsformung 16 für die Dichtung 11 wird die zu verschweißende Verbindungsstelle besser zugänglich. Man kann hier besser und vollständiger verschweißen. Auch das anschließende Verschleifen der Schweißnaht kann mit größerer Effektivität erfolgen, da dieser Bereich besser zugänglich ist. Erhebliche Kosteneinsparungen sind gegeben. Fig. 6 zeigt diese Konzeption während Fig. 7 zeigt, wie dieser Eckbereich anschließend mit einer Dichtungshalteschiene 19 nach zuvor erledigtem Verschleifen der Schweißnähte abgedeckt wird.

Fertigungstechnisch zweckmäßig ist es auch, daß nach bevorzugter Lehre der Erfindung der Profilrahmen 2 gerade und nicht nach außen bombiert ist und daß eine gestaltungsbedingte Bombierung o. dgl. durch zusätzliche Anbauteile, insbesondere eine Rahmenabdeckung, erreicht ist. Die Rahmenabdekkung kann beispielsweise auch durch das Verstärkungsteil 8 der B-Säule gleichzeitig mit verwirklicht sein.

Herstellungstechnisch empfiehlt es sich, Hohlprofil 13, Zusatzprofil(en) 17 und ggf. Flansch 14 in geradem Zustand zur Bildung des Profilrahmens dauerhaft fest zu verbinden, vorzugsweise zu verschweißen, und anschließend insgesamt streck zu biegen. Diese Herstellungsweise erkennt man an den Streckbiege-Spuren am Profilrahmen insgesamt.

Gegenstand der Erfindung ist im übrigen auch eine Kraftfahrzeugtür oder - klappe insgesamt, deren Gesamtkonstruktion den konstruktiven Überlegungen die zum Profilrahmen 2 zuvor ausgeführt worden sind, folgt. Insoweit darf auf die entsprechenden Ansprüche verwiesen werden.

Hinsichtlich des Herstellungsverfahrens gibt es bevorzugte Abläufe, die Gegenstand der entsprechenden Verfahrensansprüche sind. Insbesondere bietet es sich an, das Abkanten des Flansches 14 vor dem Verfahrensschritt des abschließenden Streckbiegens des Profilrahmens 2 in seine endgültige Form vorzunehmen.

Anstelle eines Streckbiegens kann man ggf. auch ein Rollbiegen oder anderer materialbezogen passende Verformungsverfahren einsetzen, sofern sie hinreichend kostengünstig durchführbar sind. Das Streckbiegen hat sich aber in der Praxis als besonders zweckmäßig herausgestellt.

Neben Stahl als Werkstoff des Flachbandmaterials zur Herstellung des Profilrahmens 2 ist grundsätzlich auch Leichtmetall einsetzbar, wenn dies kostenmäßig und verarbeitungstechnisch angemessen zu realisieren ist.

## Patentansprüche

1. Profilrahmen als Türfensterrahmen einer Kraftfahrzeugtür oder -klappe, mit einem Hohlprofil (13), das vorzugsweise geschlossen ist und vorzugsweise mindestens einen dem Verlauf des Hohlprofils (13) folgenden Flansch (14) aufweist,
und mit mindestens einer Anlagefläche (15) und/oder Anbringungsformung (16) am Hohlprofil (13) und/oder am Flansch (14), wobei
mindestens eine der Anlageflächen (15) und/oder Anbringungsformungen (16) an einem vom Hohlprofil (13) separaten Zusatzprofil (17) ausgebildet ist, und das Zusatzprofil (17) mit dem Hohlprofil (13) dauerhaft fest verbunden, insbesondere verschweißt ist, **dadurch gekennzeichnet, daß** der Profilrahmen zumindest teilweise als Rollprofil oder Walzprofil aus einem Flachbandmaterial, insbesondere aus einem Stahl-Flachbandmaterial,
ausgeführt ist, und daß sich das Zusatzprofil (17) im wesentlichen über die volle Länge des Hohlprofils (13) erstreckt und
daß die Längen des Hohlprofils (13) einerseits und des Zusatzprofils (17) andererseits unterschiedlich sind dergestalt, daß das Hohlprofil (13) an mindestens einem Ende einen Überstand gegenüber dem Zusatzprofil (17) aufweist zur Verankerung des Profilrahmens (2) unterhalb einer Brüstungslinie in einem Türkasten (7) der Kraftfahrzeugtür oder -klappe.

2. Profilrahmen nach Anspruch 1, **dadurch gekennzeichnet, daß** das Zusatzprofil (17) als Rollprofil oder Walzprofil aus einem Flachbandmaterial, insbesondere einem Stahl-Flachbandmaterial ausgeführt ist.

3. Profilrahmen nach Anspruch 1 oder 2, **dadurch gekennzeichnet, daß** das Hohlprofil (13) in seinem Verlauf einen im wesentlichen unveränderten Querschnitt aufweist.

4. Profilrahmen nach einem der Ansprüche 1 bis 3, **dadurch gekennzeichnet, daß** die Längen des Hohlprofils (13) einerseits und des Flansches (14) andererseits unterschiedlich sind und/oder daß die Längen des Zusatzprofils (17) einerseits und des Flansches (14) andererseits unterschiedlich sind.

5. Profilrahmen nach einem der Ansprüche 1 bis 4, **dadurch gekennzeichnet, daß** der Überstand des Hohlprofils (13) 20 mm bis 120 mm, vorzugsweise 30 mm bis 80 mm, beträgt.

6. Profilrahmen nach einem Ansprüche 1 bis 5, **dadurch gekennzeichnet, daß** das Hohlprofil (13) zu seinem geschlossenen Zustand verschweißt ist, wobei die Schweißnaht (18) des Hohlprofils (13) sich vorzugsweise innerhalb der Außenkontur des Hohlprofils (13) befindet.

7. Profilrahmen nach einem der Ansprüche 1 bis 6, **dadurch gekennzeichnet, daß** der Profilrahmen (2) gerade und nicht nach außen bombiert ist und daß eine gestaltungsbedingte Bombierung o. dgl. durch zusätzliche Anbauteile, insbesondere durch eine Rahmenabdeckung, erreicht ist.

8. Profilrahmen nach einem der Ansprüche 1 bis 7, **dadurch gekennzeichnet, daß** das Zusatzprofil (17) an dem der B-Säule zugeordneten Ende gegenüber dem Hohlprofil (13) verkürzt ist, insbesondere um ein Maß von 20 mm bis 60 mm, vorzugsweise von 30 mm bis 50 mm.

9. Profilrahmen nach einem der Ansprüche 1 bis 8 **dadurch gekennzeichnet, daß** der Profilrahmen (2) insgesamt streckgebogen ist.

10. Kraftfahrzeugtür oder -klappe mit einem Profilrahmen als Türfensterrahmen, einer Türaußenwandung und einer Türinnenwandung und/oder -innenverkleidung,
wobei der Profilrahmen (2) ein Hohlprofil (13) aufweist, das vorzugsweise geschlossen ist und vorzugsweise mindestens einen dem Verlauf des Hohlprofils (13) folgenden Flansch (14) aufweist,
und wobei der Profilrahmen (2) mindestens eine Anlagefläche (15) und/oder Anbringungsformung (16) am Hohlprofil (13) und/oder am Flansch (14) aufweist, wobei
am Profilrahmen (2) mindestens eine der Anlageflächen (15) und/oder Anbringungsformungen (16) an einem vom Hohlprofil (13) separaten Zusatzprofil (17) ausgebildet ist, und wobei
das Zusatzprofil (17) mit dem Hohlprofil (13) dauerhaft fest verbunden, insbesondere verschweißt ist, **dadurch gekennzeichnet, daß** der Profilrahmen zumindest teilweise als Rollprofil oder Walzprofil aus einem Flachbandmaterial, insbesondere einem Stahl-Flachbandmaterial,
ausgeführt ist, und daß sich das Zusatzprofil (17) im wesentlichen über die volle Länge des Hohlprofils (13) erstreckt,
daß die Längen des Hohprofils (13) einerseits und des Zusatzprofils (17) andererseits unterschiedlich sind dergestalt, daß das Hohlprofil (13) an mindestens einem Ende einen Überstand gegenüber dem Zusatzprofil (17) aufweist, und
daß der Profilrahmen (2) mit diesem Überstand im Türkasten (7) der Kraftfahrzeugtür oder -klappe verankert, insbesondere verschweißt, verschraubt und/oder vernietet, ist.

11. Kraftfahrzeugtür oder -klappe nach Anspruch 10 **dadurch gekennzeichnet,**
**daß** das Zusatzprofil (17) als Rollprofil oder Walzprofil aus einem Flachbandmaterial, insbesondere einem Stahl-Flachbandmaterial ausgeführt ist.

12. Kraftfahrzeugtür oder -klappe nach Anspruch 10 oder 11 **dadurch gekennzeichnet,**
**daß** das Hohlprofil (13) in seinem Verlauf einen im wesentlichen unveränderten Querschnitt aufweist.

13. Kraftfahrzeugtür oder -klappe nach einem der Ansprüche 10 bis 12,
**dadurch gekennzeichnet, daß** die Längen des Hohlprofils (13) einerseits und des Flansches (14) andererseits unterschiedlich sind und/oder daß die Längen des Zusatzprofils (17) einerseits und des Flansches (14) andererseits unterschiedlich sind.

14. Kraftfahrzeugtür oder -klappe nach einem der Ansprüche 10 bis 13,
**dadurch gekennzeichnet, daß** der Überstand des Hohlprofils (13) 20 mm bis 120 mm, vorzugsweise 30 mm bis 80 mm, beträgt.

15. Kraftfahrzeugtür oder -klappe nach einem der Ansprüche 10 bis 14, **dadurch gekennzeichnet, daß** das Hohlprofil (13) zu seinem geschlossenen Zustand verschweißt ist, wobei die Schweißnaht (18) des Hohlprofils (13) sich vorzugsweise innerhalb der Außenkontur des Hohlprofils (13) befindet.

16. Kraftfahrzeugtür oder -klappe nach einem der Ansprüche 10 bis 15 **dadurch gekennzeichnet, daß** der Profilrahmen (2) gerade und nicht nach außen bombiert ist und daß eine gestaltungsbedingte Bombierung o. dgl. durch zusätzliche Anbauteile, insbesondere eine Rahmenabdeckung, erreicht ist.

17. Kraftfahrzeugtür oder -klappe nach einem der Ansprüche 10 bis 16 **dadurch gekennzeichnet, daß** das Zusatzprofil (17) an dem der B-Säule zugeordneten Ende gegenüber dem Hohlprofil (13) verkürzt ist, insbesondere um eine Maß von 20 mm bis 60 mm, vorzugsweise von 30 mm bis 50 mm.

18. Kraftfahrzeugtür oder -klappe nach einem der Ansprüche 10 bis 17 **dadurch gekennzeichnet, daß** der Profilrahmen (2) insgesamt streckgebogen ist.

19. Verfahren zur Herstellung eines Profilrahmens (2) als Türfensterrahmen, einer Kraftfahrzeugtür oder -klappe, wobei der Profilrahmen (2) ein Hohlprofil (13) aufweist, das vorzugsweise geschlossen ist und vorzugsweise mindestens einen dem Verlauf des Hohlprofils (13) folgenden Flansch (14) aufweist, sowie mindestens eine Anlagefläche (15) und/oder Anbringungsformung am Hohlprofil (13) und/oder am Flansch (14) aufweist,
bei dem in einem ersten Verfahrensschritt das Hohlprofil (13) aus Flachbandmaterial, insbesondere aus Stahl-Flachbandmaterial, durch Rollprofilieren oder Walzprofilieren hergestellt wird,
bei dem ggf. ein zweiter Verfahrensschritt ausgeführt wird und in diesem zweiten Verfahrensschritt das Hohlprofil (13) mittels einer Längsschweißung an einer vorzugsweise innerhalb der Außenkontur des Hohlprofils (13) liegenden Schweißnaht (18) geschlossen wird,
bei dem in einem dritten Verfahrensschritt, der zeitlich unabhängig von dem ersten Verfahrensschritt ist, ein Zusatzprofil (17), an dem mindestens eine Anlagefläche (15) und/oder Anbringungsformung (16) ausgebildet ist, hergestellt wird mit einer Länge, die geringer ist als die Länge des Hohlprofils (13), sich aber im wesentlichen über die volle Länge des Hohlprofils erstreckt, bei dem in einem vierten Verfahrensschritt das Zusatzprofil (17) mit dem Hohlprofil (13) über die volle Länge dauerhaft fest verbunden, insbesondere verschweißt wird.

20. Verfahren nach Anspruch 19, **dadurch gekennzeichnet, daß** das Zusatzprofil (17) durch Rollprofilieren oder Walzprofilieren aus einem Flachbandmaterial, insbesondere aus einem Stahl-Flachbandmaterial, hergestellt wird.

21. Verfahren nach Anspruch 19 oder 20, **dadurch gekennzeichnet, daß** im ersten Verfahrensschritt zusammen mit dem Hohlprofil (13) ein dem Verlauf des Hohlprofils (13) folgender Flansch (14) einstückig mit ausgebildet wird.

22. Verfahren nach einem der Ansprüche 19 bis 21, **dadurch gekennzeichnet, daß** in den anfänglichen Verfahrensschritten das Hohlprofil (13), das Zusatzprofil (17) und ggf. der Flansch (14) in geradem Zustand zur Bildung des Profilrahmens (2) miteinander dauerhaft fest verbunden, vorzugsweise verschweißt, werden und daß erst danach in einem fünften Verfahrensschritt anschließend der Profilrahmen (2) zu seiner endgültigen Form streckgebogen wird.

23. Verfahren nach einem der Ansprüche 19 bis 22, **dadurch gekennzeichnet, daß** in einem sechsten Verfahrensschritt, der nach dem ersten Verfahrensschritt, vorzugsweise erst nach dem zweiten Verfahrensschritt, und vor dem fünften Verfahrensschritt abläuft, der Flansch (14) am Hohlprofil (13) auf eine gewünschte Länge abgeschnitten wird, und zwar insbesondere abgeschnitten wird, ohne die im zweiten Verfahrensschritt angebrachte Schweißnaht des Hohlprofils zu beschädigen.

## Claims

1. Sectional frame as a door-window frame of a motor vehicle door or lid,
having a hollow section (13), which is preferably closed and preferably has at least one flange (14) following the course of the hollow section (13),
and having at least one contact surface (15) and/or attachment moulding (16) on the hollow section (13) and/or on the flange (14),
at least one of the contact surfaces (15) and/or attachment mouldings (16) being configured on an auxiliary section (17) separate from the hollow section (13), and the auxiliary section (17) being permanently fixedly connected, especially welded, to the hollow section (13), **characterized**
**in that** the sectional frame is realized at least partially as a roll section or rolled section made from a flat-strip material, especially from a steel flat-strip material, and
**in that** the auxiliary section (17) extends substantially over the full length of the hollow section (13), and
**in that** the lengths of the hollow section (13), on the one hand, and of the auxiliary section (17), on the other hand, are different such that the hollow section (13), at at least one end, has a projecting length relative to the auxiliary section (17) for anchoring the sectional frame (2) below a breast line in a door box (7) of the motor vehicle door or lid.

2. Sectional frame according to Claim 1, **characterized in that** the auxiliary section (17) is realized as a roll section or rolled section made from a flat-strip material, especially from a steel flat-strip material.

3. Sectional frame according to Claim 1 or 2, **characterized in that** the hollow section (13), in its course, has a substantially constant cross section.

4. Sectional frame according to one of Claims 1 to 3, **characterized in that** the lengths of the hollow section (13), on the one hand, and of the flange (14), on the other hand, are different, and/or **in that** the lengths of the auxiliary section (17), on the one hand, and of the flange (14), on the other hand, are different.

5. Sectional frame according to one of Claims 1 to 4, **characterized in that** the projecting length of the hollow section (13) measures 20 mm to 120 mm, preferably 30 mm to 80 mm.

6. Sectional frame according to one of Claims 1 to 5, **characterized in that** the hollow section (13) is welded together into its closed state, the weld seam (18) of the hollow section (13) preferably being located within the outer contour of the hollow section (13).

7. Sectional frame according to one of Claims 1 to 6, **characterized in that** the sectional frame (2) is straight and not bowed outwards, and **in that** a design-dictated bowing or the like is achieved by additional attachment parts, especially by a frame cover.

8. Sectional frame according to one of Claims 1 to 7, **characterized in that** the auxiliary section (17), at the end assigned to the B-pillar, is shortened relative to the hollow section (13), especially by a measure from 20 mm to 60 mm, preferably from 30 mm to 50 mm.

9. Sectional frame according to one of Claims 1 to 8, **characterized in that** the sectional frame (2) as a whole is stretch-bent.

10. Motor vehicle door or lid having a sectional frame as a door-window frame, a door outer wall and a door inner wall and/or interior trim,
the sectional frame (2) having a hollow section (13), which is preferably closed and preferably has at least one flange (14) following the course of the hollow section (13),
and the sectional frame (2) having at least one contact surface (15) and/or attachment moulding (16) on the hollow section (13) and/or on the flange (14),
on the sectional frame (2) at least one of the contact surfaces (15) and/or attachment mouldings (16) being configured on an auxiliary section (17) separate from the hollow section (13), and the auxiliary section (17) being permanently fixedly connected, especially welded, to the hollow section (13), **characterized**
**in that** the sectional frame is realized at least partially as a roll section or rolled section made from a flat-strip material, especially from a steel flat-strip material, and
**in that** the auxiliary section (17) extends substantially over the full length of the hollow section (13), and
**in that** the lengths of the hollow section (13), on the one hand, and of the auxiliary section (17), on the other hand, are different such that the hollow section (13), at at least one end, has a projecting length relative to the auxiliary section (17), and
**in that** the sectional frame (2) is anchored by this projecting length in the door box (7) of the motor vehicle door or lid, especially welded, bolted and/or riveted.

11. Motor vehicle door or lid according to Claim 10, **characterized in that** the auxiliary section (17) is realized as a roll section or rolled section made from a flat-strip material, especially from a steel flat-strip material.

12. Motor vehicle door or lid according to Claim 10 or 11, **characterized in that** the hollow section (13), in its course, has a substantially constant cross section.

13. Motor vehicle door or lid according to one of Claims 10 to 12, **characterized in that** the lengths of the hollow section (13), on the one hand, and of the flange (14), on the other hand, are different, and/or in that the lengths of the auxiliary section (17), on the one hand, and of the flange (14), on the other hand, are different.

14. Motor vehicle door or lid according to one of Claims 10 to 13, **characterized in that** the projecting length of the hollow section (13) measures 20 mm to 120 mm, preferably 30 mm to 80 mm.

15. Motor vehicle door or lid according to one of Claims 10 to 14, **characterized in that** the hollow section (13) is welded together into its closed state, the weld seam (18) of the hollow section (13) preferably being located within the outer contour of the hollow section (13).

16. Motor vehicle door or lid according to one of Claims 10 to 15, **characterized in that** the sectional frame (2) is straight and not bowed outwards, and **in that** a design-dictated bowing or the like is achieved by additional attachment parts, especially by a frame cover.

17. Motor vehicle door or lid according to one of Claims 10 to 16, **characterized in that** the auxiliary section (17), at the end assigned to the B-pillar, is shortened relative to the hollow section (13), especially by a measure from 20 mm to 60 mm, preferably from 30 mm to 50 mm.

18. Motor vehicle door or lid according to one of Claims 10 to 17, **characterized in that** the sectional frame (2) as a whole is stretch-bent.

19. Process for manufacturing a sectional frame (2) as a door-window frame, a motor vehicle door or lid, the sectional frame (2) having a hollow section (13), which is preferably closed and preferably has at least one flange (14) following the course of the hollow section (13), and having at least one contact surface (15) and/or attachment moulding on the hollow section (13) and/or on the flange (14),
in which, in a first process step, the hollow section (13) is produced from flat-strip material, especially from steel flat-strip material, by roll forming or cold-roll forming,
in which, if necessary, a second process step is realized and in this second process step the hollow section (13) is closed by means of a longitudinal welding on a weld seam (18) lying preferably within the outer contour of the hollow section (13),
in which, in a third process step, which is temporally independent of the first process step, an auxiliary section (17), on which at least one contact surface (15) and/or attachment moulding (16) is configured, is made with a length which is less than the length of the hollow section (13), yet extends substantially over the full length of the hollow section,
in which, in a fourth process step, the auxiliary section (17) is permanently fixedly connected, especially welded, to the hollow section (13) over the full length.

20. Process according to Claim 19, **characterized in that** the auxiliary section (17) is produced by roll forming or cold-roll forming from a flat-strip material, especially from a steel flat-strip material.

21. Process according to Claim 19 or 20, **characterized in that**, in the first process step, a flange (14) following the course of the hollow section (13) is configured as one with the hollow section (13).

22. Process according to one of Claims 19 to 21, **characterized in that**, in the initial process steps, the hollow section (13), the auxiliary section (17), and, if necessary, the flange (14) are permanently fixedly connected, preferably welded, to one another in the straight state to form the sectional frame (2), and **in that** only thereafter, in a fifth process step, is the sectional frame (2) then stretch-bent into its final shape.

23. Process according to one of Claims 19 to 22, **characterized in that**, in a sixth process step, which proceeds after the first process step, preferably only after the second process step, and before the fifth process step, the flange (14) on the hollow section (13) is cut to a desired length, to be precise is cut, in particular, without damaging that weld seam of the hollow section which was made in the second process step.

## Revendications

1. Cadre profilé sous forme de fenêtre de porte d'une porte ou d'un hayon de véhicule automobile, comprenant un profilé creux (13) qui est de préférence fermé et présente de préférence au moins une bride (14) suivant le contour du profilé creux (13),
et comprenant au moins une surface d'appui (15) et/ou une formation de montage (16) sur le profilé creux (13) et/ou sur la bride (14),
au moins l'une des faces d'appui (15) et/ou formations de montage (16) étant réalisée sur un profilé supplémentaire (17) séparé du profilé creux (13), et le profilé supplémentaire (17) étant connecté fixement de manière durable au profilé creux (13), notamment par soudage, **caractérisé en ce que** le cadre profilé est réalisé au moins partiellement sous forme de profilé roulé ou de profilé laminé en un matériau plat en bande, notamment en un matériau d'acier plat en bande, et **en ce que** le profilé supplémentaire (17) s'étend essentiellement sur toute la longueur du profilé creux (13) et **en ce que** les longueurs du profilé creux (13) d'une part et du profilé supplémentaire (17) d'autre part sont différentes de telle sorte que le profilé creux (13) présente sur au moins une extrémité, un dépassement par rapport au profilé supplémentaire (17) pour l'ancrage du cadre profilé (2) en dessous d'une ligne de rebord dans une caisse de porte (7) de la porte ou du hayon de véhicule automobile.

2. Cadre profilé selon la revendication 1, **caractérisé en ce que** le profilé supplémentaire (17) est réalisé sous forme de profilé roulé ou laminé en un matériau plat en bande, notamment en un matériau d'acier plat en bande.

3. Cadre profilé selon la revendication 1 ou 2, **caractérisé en ce que** le profilé creux (13) présente une section transversale essentiellement non modifiée sur tout son pourtour.

4. Cadre profilé selon l'une quelconque des revendications 1 à 3, **caractérisé en ce que** les longueurs du profilé creux (13) d'une part et de la bride (14) d'autre part sont différentes et/ou en ce que les longueurs du profilé supplémentaire (17) d'une part et de la bride (14) d'autre part sont différentes.

5. Cadre profilé selon l'une quelconque des revendications 1 à 4, **caractérisé en ce que** le dépassement du profilé creux (13) est de 20 mm à 120 mm, de préférence de 30 mm à 80 mm.

6. Cadre profilé selon l'une quelconque des revendications 1 à 5, **caractérisé en ce que** le profilé creux (13) est soudé dans son état fermé, le joint de soudure (18) du profilé creux (13) se trouvant de préférence à l'intérieur du contour extérieur du profilé creux (13).

7. Cadre profilé selon l'une quelconque des revendications 1 à 6, **caractérisé en ce que** le cadre profilé (2) est droit et n'est pas bombé vers l'extérieur et **en ce qu'**un bombement dû à la configuration ou similaire est obtenu par des pièces rapportées supplémentaires, notamment par un recouvrement du cadre.

8. Cadre profilé selon l'une quelconque des revendications 1 à 7, **caractérisé en ce que** le profilé supplémentaire (17) est raccourci à l'extrémité associée à la colonne B par rapport au profilé creux (13), notamment de 20 mm à 60 mm, de préférence de 30 mm à 50 mm.

9. Cadre profilé selon l'une quelconque des revendications 1 à 8, **caractérisé en ce que** le cadre profilé (2) est formé dans son ensemble par traction et flexion.

10. Porte ou hayon de véhicule automobile comprenant un cadre profilé en tant que cadre de fenêtre de porte, une paroi extérieure de porte et une paroi intérieure de porte et/ou un habillage interne de porte, le cadre profilé (2) présentant un profilé creux (13) qui est de préférence fermé et qui présente de préférence au moins une bride (14) suivant le contour du profilé creux (13), et le cadre profilé (2) présentant au moins une surface d'appui (15) et/ou une formation de montage (16) sur le profilé creux (13) et/ou sur la bride (14), sur le cadre profilé (2), au moins l'une des faces d'appui (15) et/ou formations de montage (16) étant réalisée sur un profilé supplémentaire (17) séparé du profilé creux (13), et le profilé supplémentaire (17) étant connecté fixement de manière durable au profilé creux (13), notamment par soudage, **caractérisé en ce que** le cadre profilé est réalisé au moins partiellement sous forme de profilé roulé ou de profilé laminé en un matériau plat en bande, notamment en un matériau d'acier plat en bande, et **en ce que** le profilé supplémentaire (17) s'étend essentiellement sur toute la longueur du profilé creux (13), **en ce que** les longueurs du profilé creux (13) d'une part et du profilé supplémentaire (17) d'autre part sont différentes de telle sorte que le profilé creux (13) présente sur au moins une extrémité, un dépassement par rapport au profilé supplémentaire (17) et **en ce que** le cadre profilé (2) est ancré, notamment soudé, vissé et/ou riveté avec ce dépassement dans la caisse de la porte (7) de la porte ou du hayon de véhicule automobile.

11. Porte ou hayon de véhicule selon la revendication 10, **caractérisé en ce que** le profilé supplémentaire (17) est réalisé sous forme de profilé roulé ou laminé en un matériau plat en bande, notamment en un matériau d'acier plat en bande.

12. Porte ou hayon de véhicule selon la revendication 10 ou 11, **caractérisé en ce que** le profilé creux (13) présente une section transversale essentiellement non modifiée sur tout son pourtour.

13. Porte ou hayon de véhicule selon l'une quelconque des revendications 10 à 12, **caractérisé en ce que** les longueurs du profilé creux (13) d'une part et de la bride (14) d'autre part sont différentes et/ou **en ce que** les longueurs du profilé supplémentaire (17) d'une part et de la bride (14) d'autre part sont différentes.

14. Porte ou hayon de véhicule selon l'une quelconque des revendications 10 à 13, **caractérisé en ce que** le dépassement du profilé creux (13) est de 20 mm à 120 mm, de préférence de 30 mm à 80 mm.

15. Porte ou hayon de véhicule selon l'une quelconque des revendications 10 à 14, **caractérisé en ce que** le profilé creux (13) est soudé dans son état fermé, le joint de soudure (18) du profilé creux (13) se trouvant de préférence à l'intérieur du contour extérieur du profilé creux (13).

16. Porte ou hayon de véhicule selon l'une quelconque des revendications 10 à 15, **caractérisé en ce que** le cadre profilé (2) est droit et n'est pas bombé vers l'extérieur et **en ce qu'**un bombement dû à la configuration ou similaire est obtenu par des pièces rapportées supplémentaires, notamment par un recouvrement du cadre.

17. Porte ou hayon de véhicule selon l'une quelconque des revendications 10 à 16, **caractérisé en ce que** le profilé supplémentaire (17) est raccourci à l'extrémité associée à la colonne B par rapport au profilé creux (13), notamment de 20 mm à 60 mm, de préférence de 30 mm à 50 mm.

18. Porte ou hayon de véhicule selon l'une quelconque des revendications 10 à 17, **caractérisé en ce que** le cadre profilé (2) est formé dans son ensemble par traction et flexion.

19. Procédé de fabrication d'un cadre profilé (2) sous forme de fenêtre de porte d'une porte ou d'un hayon de véhicule automobile, dans lequel le cadre profilé (2) présente un profilé creux (13) qui est de préférence fermé et présente de préférence au moins une bride (14) suivant le contour du profilé creux (13) ainsi qu'au moins une surface d'appui (15) et/ou une formation de montage (16) sur le profilé creux (13) et/ou sur la bride (14), dans lequel, dans une première étape de procédé, le profilé creux (13) est fabriqué à partir de matériau plat en bande, notamment de matériau d'acier plat en bande, par profilage par roulage ou par laminage, dans lequel éventuellement une deuxième étape de procédé est réalisée et dans cette deuxième étape de procédé le profilé creux (13) est fermé au moyen d'un soudage longitudinal au niveau d'un joint de soudure (18) se trouvant de préférence à l'intérieur du contour extérieur du profilé creux (13), dans lequel, dans une troisième étape de procédé qui est indépendante dans le temps de la première étape de procédé, un profilé supplémentaire (17), sur lequel est réalisée au moins une surface d'appui (15) et/ou une formation de montage (16), est fabriqué avec une longueur qui est inférieure à la longueur du profilé creux (13) mais qui s'étend essentiellement sur toute la longueur du profilé creux, dans lequel, dans une quatrième étape de procédé, le profilé supplémentaire (17) est connecté fixement de manière durable au profilé creux (13), notamment par soudage.

20. Procédé selon la revendication 19, **caractérisé en ce que** le profilé supplémentaire (17) est fabriqué par profilage par roulage ou laminage à partir de matériau plat en bande, notamment de matériau d'acier plat en bande.

21. Procédé selon la revendication 19 ou 20, **caractérisé en ce que** dans la première étape de procédé, une bride (14) suivant le contour du profilé creux (13) est réalisée d'une pièce conjointement avec le profilé creux (13).

22. Procédé selon l'une quelconque des revendications 19 à 21, **caractérisé en ce que** dans les étapes de procédé initiales, le profilé creux (13), le profilé supplémentaire (17) et éventuellement la bride (14) sont connectés fixement de manière durable dans l'état droit pour former le cadre profilé (2), de préférence par soudage, et **en ce que** seulement ensuite, dans une cinquième étape de procédé, le cadre profilé (2) est formé à sa forme finale par traction et flexion.

23. Procédé selon l'une quelconque des revendications 19 à 22, **caractérisé en ce que** dans une sixième étape de procédé, qui se déroule après la première étape de procédé, de préférence seulement après la deuxième étape de procédé et avant la cinquième étape de procédé, la bride (14) sur le profilé creux (13) est découpée à une longueur souhaitée et ce notamment sans endommager le joint de soudure du profilé creux appliqué au cours de la deuxième étape de procédé.
